# EUROPÄISCHE PATENTSCHRIFT

(11) **EP 1 156 364 B1**
(45) Veröffentlichungstag und Bekanntmachung des Hinweises auf die Patenterteilung: **19.03.2003**
(21) Anmeldenummer: 01110566.5
(22) Anmeldetag: 30.04.2001
(51) Int. Cl.: G03B 21/00

(54) **Deckeneinbaulift für Multimedia-Projektor**
Lift integrated in the ceiling for a multimedia-projector
Ascenseur intégré dans le plafond pour un projecteur multi-media

(30) Priorität: 18.05.2000 CH 9932000
(43) Veröffentlichungstag der Anmeldung: 21.11.2001
(73) Patentinhaber: AV Weibel, 6313 Menzingen (CH)
(72) Erfinder: Weibel, Hans, 6313 Menzingen (CH)
(74) Vertreter: Kägi, Otto

(56) Entgegenhaltungen:
- DE-A- 4 018 432
- US-A- 4 577 827
- US-A- 4 750 832
- US-A- 5 261 645
- US-A- 5 366 203

## Beschreibung

Die Erfindung betrifft einen zum Einbau in eine Hohldecke o. dgl. bestimmten Lift für einen Multimedia-Projektor.

Multimediaprojektoren (z.B. Videoprojektoren, auch "Beamer" genannt) werden häufig in Konferenzzimmern, Vorführräumen usw. verwendet. Dabei ist es erforderlich bzw. erwünscht, sie mittels einer Liftvorrichtung in eine Hohldecke mit herabgehängter Deckenverkleidung einzubauen; der Lift mit dem Projektor wird dann an der Rohdecke hängend montiert, so dass der Projektor zum Betrieb nach unten ausgefahren werden kann und bei Nichtgebrauch unsichtbar im Deckenhohlraum versenkt ist. In aller Regel wird eine unten an der Liftvorrichtung zu befestigende Abdeckplatte (Paneel) vorgesehen, um den erforderlichen Ausschnitt in der Hohldecke zu verschliessen.

Die Erfindung geht aus von einer Liftkonstruktion mit einer zur Befestigung an der Rohdecke bestimmten rahmenartigen Grundplatte, an der vier gleichlaufend antreibbare Hubspindeln gelagert sind, einer Plattform zur Aufnahme des Projektors, die zwecks Heben und Senken bezüglich der Grundplatte mit an den Hubspindeln laufenden Spindelmuttern verbunden ist, und mit auf den Hubspindeln befestigten Ketten- oder Zahnrädern für deren Drehantrieb.

Eine Liftvorrichtung dieser Gattung ist aus der DE-A-40 18 432 (Fig. 2-4 und 6, 7) und ferner ähnlich - nur bezüglich Grundplatte abweichend- aus der US-A-4,750,832 bekannt. Bei jenen Vorrichtungen sind die Hubspindeln an beiden Enden in einem prismatischen Rahmenkörper gelagert, und der Projektor ist mittelbar über verschiedene Zwischenglieder an der Plattform montiert.

Ein wesenlicher Nachteil dieser bekannten Liftvorrichtungen besteht darin, dass deren oberhalb des Projektors befindlichen Teile eine beträchtliche Bauhöhe aufweisen, so dass die Gesamthöhe - Lift plus Projektor - häufig die verfügbare Höhe der Hohldecke übersteigt und der Einbau in der gewünschten Weise nicht möglich ist. Aus Gründen der Raumgestaltung (nutzbare Raumhöhe) besteht bei Hohldecken zunehmend die Tendenz, den Abstand der Deckenverkleidung zur Rohdecke minimal zu halten. Im weiteren wird von Einbauliften gefordert, dass der Projektor einerseits beim Ausfahren immer eine genau ausgerichtete, auf die Projektionsfläche zentrierte Betriebslage einnimmt und andererseits bei Nichtgebrauch die erwähnte Abdeckplatte in eine möglichst genau reproduzierbare Ruhelage gefahren wird. Auch diese Forderung kann von den bekannten Vorrichtungen nur mangelhaft erfüllt werden, unter anderem deshalb, weil der erforderliche Hub (verglichen mit der Höhe des Projektorgerätes) beträchtlich ist.

Mit der Erfindung soll ein Einbaulift der oben genannten Gattung vorgeschlagen werden, der die erwähnten Nachteile bekannter Konstruktionen vermeidet. Diese Aufgabe wird erfindungsgemäss dadurch gelöst, dass Hubspindel-Lager und Ketten- oder Zahnräder jeweils benachbart übereinander auf der der Rohdecke abgewandten Seite der Grundplatte angeordnet sind, und dass die Plattform eine zur Grundplatte hin gerichtete Vertiefung aufweist, deren Boden zur Aufnahme des Projektors bestimmte ist.

Der Einbaulift gemäss der Erfindung zeichnet sich vor allem dadurch aus, dass die Gesamthöhe die gegebene Höhe des Projektorgerätes nur unwesentlich übersteigt; dadurch ist der Einbau auch bei minimal herabgehängter Decenverkleidung praktisch immer möglich. Ausserdem ist die Plattform dank geringem Hub entlang den Spindeln stabil und präzise geführt und zwischen genau bestimmten Endlagen verfahrbar. Deshalb ist im Betrieb (untere Endlage) die Projektionsachse richtig und reproduzierbar orientiert, und ein unter dem Projektor an der Plattform montiertes Verkleidungs-Paneel kommt in der oberen Endlage genau eingepasst in den entsprechenden Ausschnitt der Deckenverkleidung zu liegen.

Besondere und vorteilhafte weitere Ausgestaltungen der im Patentanspruch 1 definierten Erfindung sind in den abhängigen Ansprüchen angegeben. Ein Ausführungsbeispiel des Erfindungsgegenstandes wird nachstehend in Verbindung mit der Zeichnung näher erläutert.
- Fig. 1: ist die Ansicht eines erfindungsgemässen Einbaulifts von unten, wobei einzelne Teile teilweise weggebrochen gezeichnet sind, und
- Fig. 2: ist ein Vertikalschnitt entlang der Linie II-II in Fig. 1, mit dem Projektor in der oberen bzw. - strichpunktiert angedeutet - in der unteren Endlage.

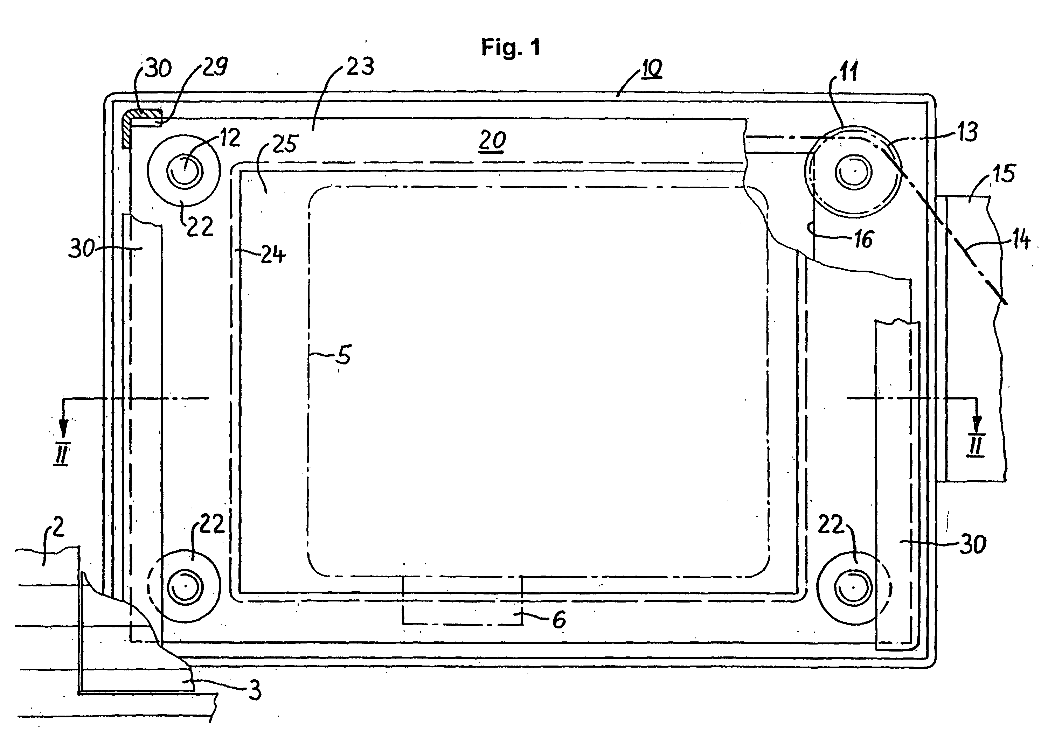

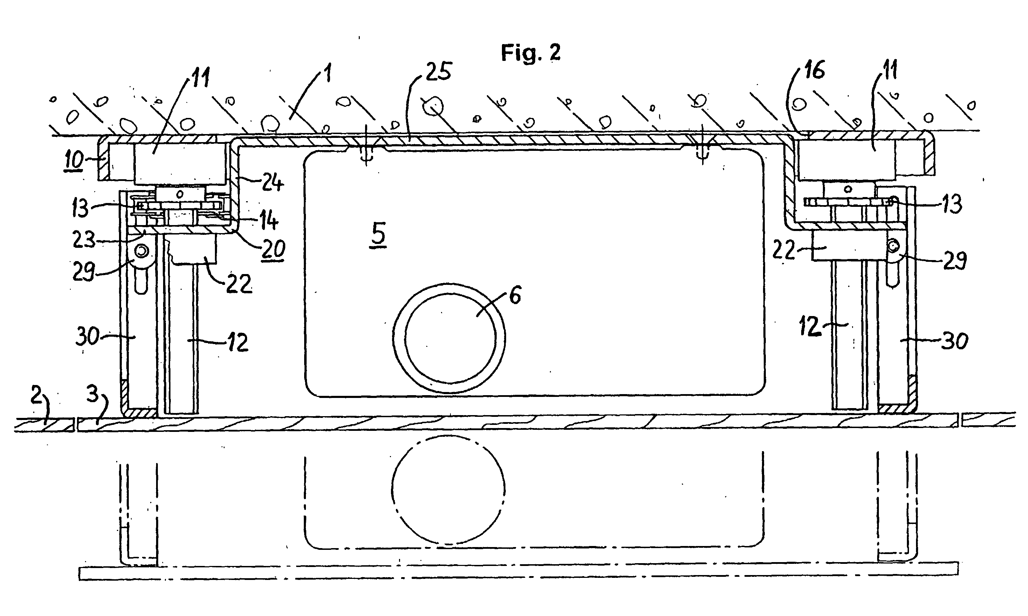

Beim Einbaulift gemäss Fig. 1 und 2 wird die Grundplatte 10 an einer Rohdecke 1, z.B. einer Betondecke, befestigt. In bekannter Weise ist die Rohdecke 1 mit einer herabgehängten Verkleidung 2 versehen, wodurch eine sogenannte Hohldecke entsteht. Für den Einbau des Lifts mit dem Projektor 5 weist die Deckenverkleidung 2 einen rechteckigen Ausschnitt auf, in welchen ein Verkleidungspaneel 3 passt, das bei Nichtgebrauch des Projektors den Ausschnitt verschliesst. Dank der mit der vorliegenden Liftkonstruktion möglichen genau reproduzierbaren Positionierung des Paneels 3 ist der Deckenausschnitt dann praktisch unsichtbar.

Die Lift-Grundplatte 10 ist rahmenartig ausgebildet und weist vorzugsweise einen rechteckigen Ausschnitt 16 auf. An der Grundplatte sind vier Spindellager 11 befestigt, in denen je eine nach unten abstehende Hubspindel 12 gelagert ist. Jede Hubspindel trägt in der Nähe des Lagers 11 ein Kettenrad 13, und die vier Kettenräder sind von einer Antriebskette 14 (in Fig. 2 nur links eingezeichnet) umschlungen. Die Kette 14 durchläuft eine seitlich angebaute, bekannte und nur in Fig. 1 teilweise angedeutete Antriebseinheit 15 mit Motor und Kettenspanner (nicht dargestellt). Auf diese Weise sind die Hubspindeln 12 gleichlaufend in beiden Drehrichtungen antreibbar Das Lager 11 und das Kettenrad 13 jeder Hubspindel sind jeweils benachbart übereinander auf der der Rohdecke 1 abgewandten Seite der Grundplatte 10 angeordnet. (Anstelle von Kettenrädern und Kette wäre selbstverständlich auch ein Antrieb mittels einem über Zahnräder laufenden Zahnriemen denkbar).

Auf jeder der Hubspindeln 12 läuft eine Spindelmutter 22. Diese Muttern 22 tragen eine generell mit 20 bezeichnete Plattform, die den Projektor 5 aufnimmt. Die Muttern 22 sind mit einem ebenen Rand oder Kragen 23 der Plattform verbunden, von dem eine wannenförmige, zur Rohdecke 1 hin gerichtete Vertiefung ausgeht. Die Vertiefung besteht aus einer umlaufenden Wand 24 und dem Boden 25. Der Multimedia-Projektor 5 mit dem Objektiv 6 ist am Boden 25 hängend montiert. In der dargestellten oberen Endlage (Ruhelage) der Plattform 20 kann der Boden 25 vorzugsweise bis in den Ausschnitt 16 der Grundplatte 10 hineinragen und somit - innerhalb des durch die Hubspindeln 12 bestimmten Gevierts - bis unmittelbar an die Rohdecke 1 heran angehoben werden.

Zum Ausgleich von baulichen Ungenauigkeiten bzw. Unebenheit der Rohdecke 1 ist häufig eine Justierung der Horizontallage des Projektors 5 erforderlich. Diese Anpassung kann z.B. mittels Unterlagscheiben zwischen dem Boden 25 und dem Boden des Projektorgehäuses vorgenommen werden oder mittels einer (nicht dargestellten) zwischengefügten Neigeplatte.

Mit dem Rand 23 der Plattform 20 sind zwei z.B. aus einem Winkelprofil gefertigte Bügel 30 verbunden, die das Paneel 3 der Deckenverkleidung tragen. Die Bügel 30 sind in der Höhe einstellbar z.B. an Laschen 29 der Plattform befestigt, so dass das Paneel 3 genau fluchtend auf die umgebende Deckenverkleidung 2 ausgerichtet werden kann.

Für den Projektionsbetrieb wird der Antrieb der Spindeln 12 aktiviert und dadurch die Plattform 20 mit dem Projektor 5 und dem Paneel 3 aus der Hohldecke ausgefahren; eine untere Endlage (Betriebsposition) ist in Fig. 2 strichpunktiert eingezeichnet. Die obere und die untere Endlage der Plattform 20 werden vorzugsweise durch (nicht dargestellte) Hub-Endschalter bestimmt. Die Führung der Plattform mit dem Projektor entlang den Spindeln 12 erfolgt präzise und stabil. Der Hubweg richtet sich natürlich nach den Erfordernissen des jeweiligen Projektionsgerätes. Indem die Hubspindeln wie dargestellt nur einseitig (mit ihrem oberen Ende im Lager 11) an der Grundplatte 10 gelagert sind, kann die Spindellänge minimal gehalten bzw. voll ausgenutzt werden. Wesentlich ist, dass die gesamte Bauhöhe der Liftanordnung die Gerätehöhe nur wenig übersteigt, so dass der Einbau auch bei geringer nutzbarer Höhe der Hohldecke möglich ist. Unter Umständen kann die Liftanordnung (in der gesamten Höhe oder teilweise) sogar in einer in der Rohdecke ausgesparten Nische eingebaut werden, wodurch ein "verdeckter" Einbau auch bei extrem niedriger, selbst die Höhe des Projektors 5 unterschreitender Hohldecke gelingt.

Die erforderliche elektrische Installation ist nicht in der Zeichnung dargestellt. Vorzugsweise wird eine feststehende Anschlussbox z.B. neben der Antriebseinheit 15 vorgesehen. Von dieser führen Speise- und Steuerleitungen zum Motor und ferner flexible Speise-, Signal- und Steuerleitungen zum Projektor 5.

## Patentansprüche

1. Zum Einbau in eine Hohldecke o. dgl. bestimmter Lift für einen Multimedia-Projektor (5), mit einer zur Befestigung an der Rohdecke (1) bestimmten rahmenartigen Grundplatte (10), an der vier gleichlaufend antreibbare Hubspindeln (12) gelagert sind, einer Plattform (20) zur Aufnahme des Projektors (5), die zwecks Heben und Senken bezüglich der Grundplatte (10) mit an den Hubspindeln (12) laufenden Spindelmuttern (22) verbunden ist, und mit auf den Hubspindeln (12) befestigten Ketten- oder Zahnrädern (13) für deren Drehantrieb,
**dadurch gekennzeichnet, dass** Hubspindel-Lager (11) und Ketten- oder Zahnräder (13) jeweils benachbart übereinander auf der der Rohdecke (1) abgewandten Seite der Grundplatte (10) angeordnet sind, und dass die Plattform (20) eine zur Grundplatte (10) hin gerichtete Vertiefung (24, 25) aufweist, deren Boden (25) zur Aufnahme des Projektors (5) bestimmt ist.

2. Einbaulift nach Anspruch 1, **dadurch gekennzeichnet, dass** die Grundplatte (10) innerhalb des durch die Hubspindeln (12) bestimmten Gevierts ausgeschnitten ist, und dass der Boden (25) der Plattform (20) bis in den Ausschnitt (16) hinein hebbar ist.

3. Einbaulift nach Anspruch 1, **dadurch gekennzeichnet, dass** die Hubspindeln (12) nur einseitig in je einem an der Grundplatte (10) befestigten Lager (11) gelagert sind.

4. Einbaulift nach Anspruch 1, **gekennzeichnet durch** Tragbügel (30) für ein Deckenverkleidungs-Paneel (3), die mit Randbereichen (23) der Plattform (20) höheneinstellbar verbunden sind.

## Claims

1. Lift is mounted into a hollow ceiling or the like for a multimedia projector (5), with a frame-shaped base plate (10) to be fastened at the original ceiling (1) and supported by four main shafts (12) being synchronously driven, a platform (20) for the reception of the projector (5) is connected with nuts (22) driving at the main shafts (12) up and down in relation to the base plate (10), and with chain- or gearwheels (13) attached to the main shafts (12) for their rotation driving,
**characterised in that** shaft bearings (11) and chain- or gearwheels (13), each are neighboured one on the top of the other, are arranged on the side of the base plate (10) turned away from the original ceiling (1), and that the platform (20) has a depth (24, 25), which is directed toward to the base plate (10) and has a bottom (25) for the reception of the projector (5).

2. Lift according to claim 1, **characterised in that** the base plate (10) within the square determined by the main shafts (12) is cut out, and that the bottom (25) of the platform (20) is raisable up into the part (16).

3. Lift according to claim 1, **characterised in that** the main shafts (12) are supported only on one side each in a bearing (11) fixed at the base plate (10).

4. Lift according to claim 1, **characterised in that** the supporting means (30) for a base plate (3) of the ceiling are connected adjustable in the height with edge parts (23) of the platform (20).

## Revendications

1. Dispositif de levage destiné à être encastré dans un plafond creux ou analogue pour un projecteur multimédia (5), comportant une plaque de base en forme de cadre (10), qui est destinée à être fixée au plafond brut (1) et sur laquelle sont montées quatre broches de levage (12) pouvant être entraînées d'une manière synchrone, une plateforme (20) destinée à recevoir le projecteur (5) et qui est reliée, en vue d'être soulevée et abaissée par rapport à la plaque de base (10), à des écrous de broche (22), qui se déplacent sur les broches de levage (12), et des roues à chaîne ou des roues dentées (13) fixées sur les broches de levage (12) et destinées à réaliser l'entraînement en rotation de ces dernières, **caractérisé en ce que** des supports (11) pour les broches de levage et les roues à chaîne ou roues dentées (13) sont superposés en étant respectivement voisins sur le côté de la plaque de base (10), tourné à l'opposé du plafond brut (1), et **en ce que** la plateforme (20) possède un renfoncement (24, 25), qui est tourné vers la plaque de base (10) et dont le fond (25) est destiné à loger le projecteur (5).

2. Dispositif de levage encastré selon la revendication 1, **caractérisé en ce que** la plaque de base (10) est découpée à l'intérieur du contour défini par les broches de levage (12) et **en ce que** le fond (25) de la plateforme (20) peut être soulevé jusque dans la découpe (16).

3. Dispositif de levage encastré selon la revendication 1, **caractérisé en ce que** les broches de levage (12) sont montées d'un seul côté dans un support (11) fixé respectivement à la plaque de base (10).

4. Dispositif de levage encastré selon la revendication 1, **caractérisé par** des étriers de support (30) pour un panneau d'habillage de plafond (3), qui sont reliés, de manière réglable en hauteur, à des zones de bord (23) de la plateforme (20).
